# EUROPÄISCHE PATENTSCHRIFT

(11) **EP 3 348 866 B1**
(45) Veröffentlichungstag und Bekanntmachung des Hinweises auf die Patenterteilung: **12.08.2020**
(21) Anmeldenummer: 17206311.7
(22) Anmeldetag: 11.12.2017
(51) Int. Cl.: F16H 45/02

(54) **HYDRODYNAMISCHE KOPPLUNGSANORDNUNG**
HYDRODYNAMIC COUPLING DEVICE
DISPOSITIF D'ACCOUPLEMENT HYDRODYNAMIQUE

(30) Priorität: 16.01.2017 DE 102017200554
(43) Veröffentlichungstag der Anmeldung: 18.07.2018
(73) Patentinhaber: ZF Friedrichshafen AG, 88046 Friedrichshafen (DE)
(72) Erfinder: Schönekäs, Jens, 97506 Grafenrheinfeld (DE); Mencher, Georg, 97493 Bergrheinfeld (DE)
(74) Vertreter: ZF Friedrichshafen AG

(56) Entgegenhaltungen:
- EP-A2- 0 789 162
- DE-A1- 19 953 172
- US-A- 4 949 822

## Beschreibung

Die vorliegende Erfindung betrifft eine hydrodynamische Kopplungsanordnung mit einem um eine Zentralachse drehbaren Gehäuse, welches an Druckmittelleitungen zur Ein- oder Ableitung von Druckmittel wenigstens in einen Druckraum angeschlossen ist, der mittels eines Kolbens einer Kupplungseinrichtung gegenüber einem in dem Gehäuse ebenfalls vorgesehenen Torusraum eines hydrodynamischen Kreises zumindest weitgehend abgedichtet ist, wobei zur axial verlagerbaren Aufnahme einer radial inneren Kolbennabe des Kolbens der Kupplungseinrichtung ein relativ zum Gehäuse drehbarer Aufnahmebereich und zur Herstellung zumindest einer Strömungsverbindung zwischen wenigstens einer Druckmittelleitung und dem Druckraum zumindest ein relativ zum Gehäuse drehbarer Durchlass in einem Durchlassbereich vorgesehen ist.

Eine derartige hydrodynamische Kopplungsanordnung, ausgebildet als hydrodynamischer Drehmomentwandler, ist durch die DE 10 2007 014 311 A1 bekannt. Das um eine Zentralachse drehbare Gehäuse dieser Kopplungsanordnung bildet an seiner Abtriebsseite ein Pumpenrad aus, das zusammen mit einem Turbinenrad und einem axial zwischen Pumpenrad und Turbinenrad angeordneten Leitrad einen hydrodynamischen Kreis bildet. Das Turbinenrad ist an einem Torsionsschwingungsdämpfer befestigt, dessen Torsionsschwingungsdämpfernabe über eine erste Verzahnung mit einer als Abtrieb der hydrodynamischen Kopplungsanordnung wirksamen Getriebeeingangswelle drehfest verbunden ist, und über eine zweite Verzahnung mit einer den Aufnahmebereich für den Kolben der Kupplungseinrichtung sowie den Durchlassbereich für das Druckmittel aufweisenden Versorgungsnabe. Die Getriebeeingangswelle weist Druckmittelleitungen auf, von denen eine zentrale erste Druckmittelleitung zum Durchlassbereich führt, und eine radial außerhalb der zentralen ersten Druckmittelleitung verlaufende zweite Druckmittelleitung zu einem vom Durchlassbereich der Versorgungsnabe axial beabstandeten Verbindungsbereich. Während der Durchlassbereich in den Druckraum mündet, der sich axial zwischen einer antriebsseitigen Gehäusewandung und dem Kolben der Kupplungseinrichtung befindet, mündet der Verbindungsbereich in einen Zwischenraum, der axial zwischen dem Kolben der Kupplungseinrichtung und einer das Gehäuse radial unterteilenden Trennwandung verläuft. Die vom Zwischenraum abgewandte Seite der Trennwandung grenzt an einen den hydrodynamischen Kreis, den Torsionsschwingungsdämpfer sowie Teile der Kupplungseinrichtung aufnehmenden Torusraum an.

Da die Trennwandung drehfest mit dem Gehäuse verbunden ist, rotiert diese mit Gehäusedrehzahl um die Zentralachse, und auch der Kolben der Kupplungseinrichtung rotiert annähernd mit Gehäusedrehzahl, da die radial äußere Abdichtung des Kolbens aufgrund ihres im Vergleich zur radial inneren Abdichtung des Kolbens großen Radius eine deutlich höhere Mitnahmewirkung erzielt. Im Druckraum sowie im Zwischenraum enthaltenes Druckmittel wird somit im Wesentlichen mit Antriebsdrehzahl bewegt, so dass diesbezüglich vergleichbare Druckbedingungen beidseits des Kolbens vorliegen, was sich bei einem Ein- oder Ausrückvorgang der Kupplungseinrichtung vorteilhaft bemerkbar macht. Allerdings wird dieser Vorteil nur aufgrund der Trennwandung erzielt, welche zum einen die Anzahl der Bauteile der Kopplungsanordnung erhöht, und zum anderen deren axiale Ausdehnung vergrößert.

Würde bei der bekannten hydrodynamischen Kopplungsanordnung auf die Trennwandung verzichtet, dann würde der Torusraum unmittelbar an den Kolben der Kupplungseinrichtung heranreichen. Da wesentliche im Torusraum enthaltene Elemente, wie das Turbinenrad und der Ausgang des Torsionsschwingungsdämpfers, im Wesentlichen mit Abtriebsdrehzahl betrieben werden, würde das im Torusraum enthaltene Druckmittel im Wesentlichen mit Abtriebsdrehzahl beaufschlagt. Im Gegensatz dazu würden im Druckraum keine geänderten Bedingungen vorliegen, so dass das dort enthaltene Druckmittel weiterhin im Wesentlichen mit Antriebsdrehzahl beaufschlagt ist. Unter der Voraussetzung einer offenen Kupplungseinrichtung ist aufgrund der unterschiedlichen Rotationsgeschwindigkeiten des Druckmittels in Druckraum und Torusraum ein erhebliches Druckgefälle festzustellen, das zu einer ungewollten Axialverlagerung des Kolbens führen kann. Erfolgt diese Axialverlagerung des Kolbens beispielsweise in Ausrückrichtung, muss zum Einrücken nicht nur der eigentliche Schließdruck des Kolbens über die Druckmittelleitungen eingestellt werden, sondern darüber hinaus auch eine Kraft, die betragsmäßig dem Druckgefälle entspricht, das sich aufgrund des Drehzahlgefälles beim Druckmittel eingestellt hat.

Da dieses Druckgefälle in Abhängigkeit von der jeweiligen Drehzahl variiert, gestaltet sich ein sauberes Einrücken des Kolbens problematisch.

Aus der DE 199 53 172 (A1) ist eine hydrodynamische Kopplungseinrichtung bekannt, die ein mit Arbeitsfluid befülltes oder befüllbares Gehäuse umfasst. Ein Turbinenrad ist in dem Gehäuse drehbar angeordnet ist und mit einer Abtriebswelle zur gemeinsamen Drehung verbunden. Ferner ist eine Gleitlagerungsanordnung gezeigt, durch welche das Turbinenrad bezüglich des Gehäuses drehbar gelagert ist und welche eine Arbeitsfluidkanalanordnung zum Durchtritt von Arbeitsfluid von radial außen nach radial innen zum Bereich der Abtriebswelle oder umgekehrt aufweist.

Der Erfindung liegt die Aufgabe zugrunde, eine hydrodynamische Kopplungsanordnung derart auszubilden, dass bei kompaktem Aufbau ein problemloses Ein- oder Ausrücken des Kolbens einer Kupplungseinrichtung gewährleistet ist.

Zur Lösung dieser Aufgabe ist vorgesehen, eine hydrodynamische Kopplungsanordnung mit einem Gehäuse um eine Zentralachse drehbaren Gehäuse zu versehen, welches an Druckmittelleitungen zur Ein- oder Ableitung von Druckmittel wenigstens in einen Druckraum angeschlossen ist, der mittels eines Kolbens einer Kupplungseinrichtung gegenüber einem in dem Gehäuse ebenfalls vorgesehenen Torusraum eines hydrodynamischen Kreises zumindest weitgehend abgedichtet ist, wobei zur axial verlagerbaren Aufnahme einer radial inneren Kolbennabe des Kolbens der Kupplungseinrichtung ein relativ zum Gehäuse drehbarer Aufnahmebereich und zur Herstellung zumindest einer Strömungsverbindung zwischen wenigstens einer Druckmittelleitung und dem Druckraum zumindest ein relativ zum Gehäuse drehbarer Durchlass in einem Durchlassbereich vorgesehen ist.

Von besonderer Bedeutung ist, dass wenigstens eine Durchlassmündung des zumindest einen Durchlasses des Durchlassbereiches in Bezug zur Zentralachse radial weiter nach außen ragt als ein den Aufnahmebereich umschließender Innendurchmesser der radial inneren Kolbennabe des Kolbens.

Da der Kolben der Kupplungseinrichtung mit einer radial inneren Kolbennabe auf einem Aufnahmebereich angeordnet ist, und dieser Aufnahmebereich ebenso wie der Durchlassbereich relativ zum Gehäuse drehbar ist, werden der Aufnahmebereich und der Durchlassbereich mit einer anderen, bei Zugbetrieb geringeren Drehzahl bewegt als das mit Antriebsdrehzahl rotierende Gehäuse. Sind der Aufnahmebereich und der Durchlassbereich an einem Bauteil vorgesehen, das mit einem abtriebsseitigen Bauteil, wie einem Turbinenrad oder dem Ausgang eines Torsionsschwingungsdämpfers in Drehverbindung steht, dann rotieren der Aufnahmebereich und der Durchlassbereich jeweils mit Abtriebsdrehzahl. Ragt nun wenigstens eine Durchlassmündung des zumindest einen Durchlasses des Durchlassbereiches in Bezug zur Zentralachse des Gehäuses radial weiter nach außen als ein den Aufnahmebereich umschließender Innendurchmesser der radial inneren Kolbennabe des Kolbens so, dass die Durchlassmündung zumindest an einer Position um eine Wegstrecke X radial weiter nach außen ragt als der Innendurchmesser der Kolbennabe, wobei die Wegstrecke X an der Position größer ist, als eine radiale Wegstrecke zwischen Innendurchmesser der Kolbennabe und einem Außendurchmesser der Kolbennabe, dann wird eine Druckmittelströmung, die innerhalb des zumindest einen Durchlasses mit bei Zugbetrieb geringerer Drehzahl als das mit Antriebsdrehzahl rotierende Gehäuse bewegt wird, über die wenigstens eine Durchlassmündung mit dieser Rotationsgeschwindigkeit weit nach radial außen gefördert, und bringt dadurch diese Strömung mit der besagten Rotationsgeschwindigkeit zumindest näherungsweise in das radiale Zentrum des Druckraums ein. Dadurch wird Einfluss auf die Rotationsgeschwindigkeit des Druckmittels im Druckraum genommen, indem dieses auf eine Rotationsgeschwindigkeit verzögert wird, die einer ansonsten bei Abtriebsdrehzahl anliegenden Rotationsgeschwindigkeit zumindest weitgehend angenähert ist. Dies gilt auch dann, wenn der Druckraum axial zwischen dem Wandlergehäuse und dem Kolben vorgesehen sein sollte, und damit zwischen zwei im Wesentlichen mit Antriebsdrehzahl bewegten Bauteilen. Auf der Gegenseite des Kolbens der Kupplungseinrichtung befindet sich ein Torusraum, in welchem insbesondere abtriebsseitige Bauteile, wie das Turbinenrad oder der Ausgang des Torsionsschwingungsdämpfers, wesentlichen Einfluss auf die Rotationsgeschwindigkeit des Druckmittels nehmen. Dadurch nähert sich auch im Torusraum die Rotationsgeschwindigkeit des Druckmittels im Wesentlichen der Abtriebsdrehzahl an.

Durch Verzögerung der Rotationsgeschwindigkeit des Druckmittels antriebsseitig des Kolbens im Wesentlichen auf die Rotationsgeschwindigkeit des Druckmittels abtriebsseitig des Kolbens wird also erreicht, dass beidseits des Kolbens vergleichbare Rotationsgeschwindigkeiten des Druckmittels anliegen, wodurch ein betriebsbedingtes, ungewolltes Druckgefälle in den Räumen beidseits des Kolbens vermieden wird. Dies macht sich bei einem Ein- oder Ausrückvorgang der Kupplungseinrichtung vorteilhaft bemerkbar, da bereits ein vergleichbar geringer Druck, aufgebracht über eine der Druckleitungen, genügt, um eine Axialverlagerung des Kolbens gegenüber dem Aufnahmebereich zu erzeugen.

Der Durchlassbereich für das Druckmittel kann ebenso wie der Aufnahmebereich für den Kolben der Kupplungseinrichtung Teil einer Versorgungsnabe sein. Derartige Versorgungsnaben finden sich bei hydrodynamischen Kopplungsanordnungen üblicherweise axial zwischen einem antriebsseitigen Gehäusedeckel des Gehäuses und einer Abtriebsnabe, die ihrerseits in Abstützverbindung mit einer abtriebsseitigen Gehäusewandung des Gehäuses steht. In diesem Fall besteht also Einstückigkeit zwischen dem Durchlassbereich für das Druckmittel, dem Aufnahmebereich für den Kolben der Kupplungseinrichtung und der Versorgungsnabe.

Alternativ hierzu kann vorgesehen sein, den Durchlassbereich für das Druckmittel an einer separaten Durchlasseinrichtung vorzusehen, und diese Durchlasseinrichtung drehfest mit der Versorgungsnabe zu verbinden. Der Aufnahmebereich für den Kolben der Kupplungseinrichtung ist dann immer noch Teil der Versorgungsnabe. Ebenso ist aber auch denkbar, den Aufnahmebereich für den Kolben der Kupplungseinrichtung zusammen mit dem Durchlassbereich für das Druckmittel an der Durchlasseinrichtung vorzusehen. Die Versorgungsnabe wäre dann lediglich noch Träger für den Durchlassbereich und den Aufnahmebereich.

Die drehfeste Aufnahme der Durchlasseinrichtung an der Versorgungsnabe kann kraftschlüssig, formschlüssig oder stoffschlüssig erfolgen. Eine kraftschlüssige Verbindung kann durch Aufpressen der Durchlasseinrichtung auf der Versorgungsnabe hergestellt werden, durch Ausbildung einer Verstemmung zwischen den beiden Bauteilen oder durch Herstellung einer Keilverbindung. Für eine formschlüssige Verbindung ist beispielhaft eine Verzahnung oder eine Nut/Feder-Verbindung zu erwähnen, und für eine stoffschlüssige Verbindung eine Schweißnaht, eine Lotverbindung oder eine Klebeverbindung.

Die Erfindung ist nachfolgend anhand eines Ausführungsbeispiels näher erläutert. Es zeigt:
Fig. 1 eine Schnittdarstellung einer hydrodynamischen Kopplungsanordnung in Form eines hydrodynamischen Drehmomentwandlers, mit einem Gehäuse, das axial zwischen einem antriebsseitigen Gehäusedeckel und einer abtriebsseitigen Gehäusewandung eine Versorgungsnabe aufnimmt, die einen zum Druckmitteldurchgang bestimmten Druckmittelbereich sowie einen zur Zentrierung eines Kolbens einer Kupplungseinrichtung bestimmten Aufnahmebereich aufweist;
Fig. 2 eine Herauszeichnung der Versorgungsnabe in vergrößerter Darstellung;
Fig. 3 wie Fig. 1, aber mit Ausbildung des Druckmittelbereiches in einer separaten Druckmitteleinrichtung, die drehfest an der Versorgungsnabe aufgenommen ist;
wobei die drehfeste Verbindung der Druckmitteleinrichtung mit der Versorgungsnabe kraftschlüssig erfolgt;
Fig. 4 eine Herauszeichnung der Druckmitteleinrichtung und der Versorgungsnabe der Fig. 3 in vergrößerter Darstellung, wobei die drehfeste Verbindung der Druckmitteleinrichtung mit der Versorgungsnabe stoffschlüssig erfolgt;
Fig. 5 wie Fig. 4, aber mit Ausbildung des Druckmittelbereiches und des Aufnahmebereiches an einer separaten Druckmitteleinrichtung, die drehfest an der Versorgungsnabe aufgenommen ist;
Fig. 6 wie Fig. 4, wobei die drehfeste Verbindung der Druckmitteleinrichtung mit der Versorgungsnabe formschlüssig mittels einer Verzahnung erfolgt;
Fig. 7 wie Fig. 4, wobei die drehfeste Verbindung der Druckmitteleinrichtung mit der Versorgungsnabe formschlüssig mittels eines Verbindungselementes erfolgt.

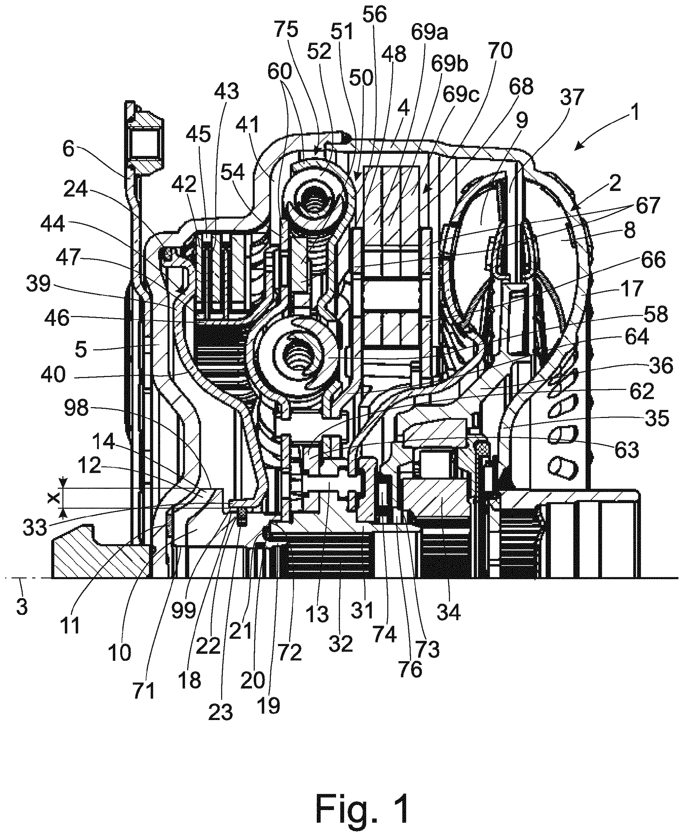

In Fig 1 ist eine Kopplungsanordnung 1 in Form eines hydrodynamischen Drehmomentwandlers 2 in Schnittdarstellung abgebildet. Ein um eine Zentralachse 3 drehbares Gehäuse 4 ist an seiner einem Antrieb, wie einer Brennkraftmaschine zugewandten Seite mit einem Gehäusedeckel 5 versehen, an welchem eine Antriebsplatte 6 befestigt ist. Die Antriebsplatte 6 kann über eine nicht gezeigte Flexplatte mit einer Kurbelwelle des Antriebs drehfest verbunden werden. Eine derartige Flexplatte sowie die damit verbundene Kurbelwelle des Antriebs ist in der DE 32 22 119 C1 in Fig. 1 dargestellt.

Das Gehäuse 4 bildet an einer vom Gehäusedeckel 5 abgewandten abtriebsseitigen Gehäusewandung 17 ein Pumpenrad 8, dem ein Turbinenrad 9 axial gegenüberliegend zugeordnet ist. Das Turbinenrad 9 ist über eine Mehrzahl von entlang seines Umfangs vorgesehenen Befestigungselementen 13 drehfest mit einer Abtriebsnabe 31 verbunden, die mittels einer Innenverzahnung 32 mit einem nicht gezeigten Abtrieb, wie einer Getriebeeingangswelle eines Getriebes, drehfest verbunden ist. Die Abtriebsnabe 31 stützt sich in Achsrichtung einerends über eine Versorgungsnabe 10 und einen Abstandsring 11 an dem Gehäusedeckel 5 des Gehäuses 4 und anderenends an einem Freilauf 34 ab, der sich seinerseits an einer Gehäusenabe 35 der abtriebsseitigen Gehäusewandung 17 des Gehäuses 4 axial abstützt. Der Freilauf 34 zentriert ein Leitrad 36, das axial zwischen dem Pumpenrad 8 und dem Turbinenrad 9 angeordnet ist, und zusammen mit dem Pumpenrad 8 und dem Turbinenrad 9 einen hydrodynamischen Kreis 37 bildet.

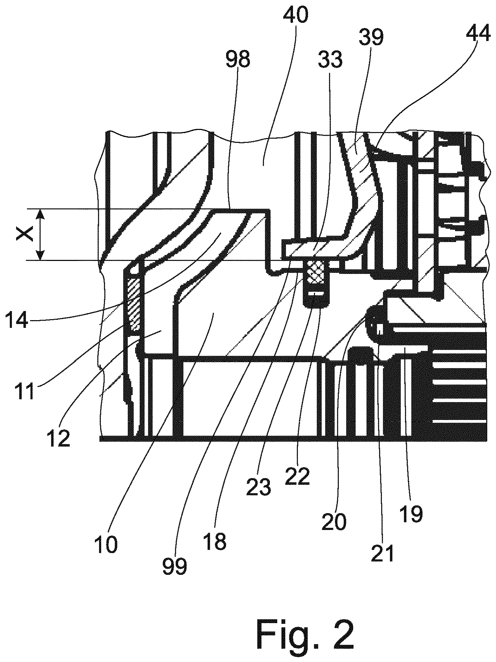

Die Versorgungsnabe 10 weist an ihrer dem Abstandsring 11 und damit dem Gehäusedeckel 5 zugewandten Seite einen Durchlassbereich 12 mit zumindest einem Durchlass 14, vorzugsweise aber mit einer Mehrzahl von über den Umfang gleichmäßig verteilten Durchlässen 14 auf. Der zumindest eine Durchlass 14 verfügt über eine Durchlassmündung 98. Axial benachbart zum Durchlassbereich 12 geht die Versorgungsnabe 10 über in einen Aufnahmebereich 18 für einen Kolben 39 einer Kupplungsvorrichtung 44. In dem Aufnahmebereich 18 ist eine Vertiefung 23 zur Aufnahme einer Abdichtung 22 vorgesehen. Die Abdichtung 22 steht mit einem Innendurchmesser 99 einer das radial innere Ende des Kolbens 39 bildenden Kolbennabe 33 in Wirkverbindung. Wie aus Fig. 2 noch anschaulicher hervorgeht, ragt die Durchlassmündung 98 um eine Wegstrecke X radial weiter nach außen als der Innendurchmesser 99 der Kolbennabe 33 des Kolbens 39 der Kupplungseinrichtung 44.

Das von den Durchlässen 14 abgewandte axiale Ende der Versorgungsnabe 10 verfügt über einen eine Außenverzahnung aufweisenden Axialvorsprung 19, der über seine Außenverzahnung drehfest in die Innenverzahnung 32 der Abtriebsnabe 31 eingreift. Schließlich ist die Versorgungsnabe 10 axial benachbart zum Axialvorsprung 19 mit einem Verbindungsbereich 21 versehen, der zum Durchgang von Druckmittel zumindest einen Durchgang 20 aufweist.

Der Kolben 39 nimmt an seinem radial äußeren Ende eine Abdichtung 24 auf, über welche er zumindest im Wesentlichen in radialer Richtung mit dem Gehäusedeckel 5 und daher mit dem Gehäuse 4 in Wirkverbindung steht. Da die Abdichtung 24 auf einem erheblich größeren Durchmesser wirksam ist als die der Kolbennabe 33 zugeordnete Abdichtung 22, und zudem zwischen dem Gehäusedeckel 5 und der äußeren Abdichtung 24 eine deutlich höhere Reibkraft wirkt als zwischen der Kolbennabe 3 und der Abdichtung 22, wird der Kolben 39 im Wesentlichen mit der Drehzahl des Gehäuses 4 und daher mit Antriebsdrehzahl um die Zentralachse 3 rotieren. Die Versorgungsnabe 10 und damit der Durchlassbereich 12 rotiert dagegen mit der Drehzahl der Abtriebsnabe 31, und daher mit Abtriebsdrehzahl.

Durch den Kolben 39 wird ein axial zwischen ihm und dem Gehäusedeckel 5 liegender Druckraum 40 begrenzt, während die axiale Gegenseite des Kolbens 39 einen Torusraum 41 begrenzt, welcher eine Mehrzahl von Kupplungselementen 42, 43 umgibt, die zusammen mit dem Kolben 39 eine Kupplungsvorrichtung 44 bilden. Radial äußere erste Kupplungselemente 42 sind mittels einer Verzahnung 45 drehfest am Gehäuse 4 aufgenommen, während radial innere zweite Kupplungselemente 43 ebenfalls mittels einer Verzahnung 47 mit einem Innenkupplungselemententräger 46 drehverbunden sind, der mit einer als Eingang 48 eines Torsionsschwingungsdämpfers 50 wirksamen radial äußeren Nabenscheibe 51 drehverbunden ist. Die radial äußere Nabenscheibe 51 wirkt in Umfangsrichtung auf eine radial äußere erste Dämpfereinheit 52 des Torsionsschwingungsdämpfers 50, die sich an ihrer von der radial äußeren Nabenscheibe 51 abgewandten Umfangsseite an Deckblechen 54, 56 abstützt, welche einerseits den Ausgang der radial äußeren ersten Dämpfereinheit 52 und andererseits den Eingang einer radial inneren zweiten Dämpfereinheit 58 des Torsionsschwingungsdämpfers 50 bilden, und daher nachfolgend kurz als Zwischenübertragungselemente 60 bezeichnet sind. Die radial innere zweite Dämpfereinheit 58 stützt sich mit ihrer von den Zwischenübertragungselementen 60 abgewandten Umfangsseite an einer radial inneren Nabenscheibe 62 ab, die mit der Abtriebsnabe 31 drehfest verbunden ist, und die einen Ausgang 63 des Torsionsschwingungsdämpfers 50 bildet.

An den Zwischenübertragungselementen 60 des Torsionsschwingungsdämpfers 50 ist ein Tilgermassen-Trägerelement 64 eines Tilgersystems 70 befestigt, wobei das antriebsseitige Tilgermassen-Trägerelement 64 gemeinsam mit einem axial beabstandeten abtriebsseitigen Tilgermassen-Trägerelement 66 einen Tilgermassenträger 67 bildet. Dieser Tilgermassenträger 67 dient zur Aufnahme einer Mehrzahl von entlang des Umfangs verteilten Tilgermassen 68, wobei jede dieser Tilgermassen 68 in Achsrichtung aus jeweils einer Mehrzahl an Tilgermassenelementen 69a, 69b und 69c zusammengesetzt sein kann. Zur axialen Verbindung der beiden Tilgermassen-Trägerelemente 64 und 66 sind eine Mehrzahl von nicht dargestellten Abstandsstücken vorgesehen. Derart relativ zueinander festgelegt, sichern die beiden Tilgermassen-Trägerelemente 64 und 66 die Tilgermassenelemente 69a bis 69c der jeweiligen Tilgermasse 68 axial zwischen sich. Die Tilgermassenelemente 69a bis 69c weisen, ebenso wie die Tilgermassen-Trägerelemente 64, 66, an sich bekannte und daher nicht dargestellte Führungsbahnen auf, die jeweils durch walzenförmige Koppelelemente miteinander in Wirkverbindung stehen, und dafür sorgen, dass die Tilgermassen 68 Relativauslenkungen gegenüber dem Tilgermassenträger 67 sowohl in Radialrichtung als auch in Umfangsrichtung ausführen können. Einzige variable Größe bei dem Tilgersystem 70 ist die Drehzahl, so dass dieses Tilgersystem 70 drehzahladaptiv wirksam ist. Der Torsionsschwingungsdämpfer 50 bildet zusammen mit dem Tilgersystem 70 eine Schwingungsdämpfungseinrichtung 75.

Der Durchlass 14 ist Teil einer ersten Druckmittelleitung 71, der Durchgang 20 Teil einer zweiten Druckmittelleitung 72 und eine Passage 76 in einem axial zwischen Abtriebsnabe 31 und Freilauf 34 vorgesehenen Drucklager 74 ist Teil einer dritten Druckmittelleitung 73. Die Druckmittelleitungen 71 bis 73 sind jeweils nicht komplett dargestellt, da die Gestaltung derartiger Druckmittelleitungen im Einzelnen der eingangs zitierten DE 10 2007 014 311 A1 entnommen werden können. Wie die DE 10 2007 014 311 A1 in Fig. 1 zeigt, kann die erste Druckmittelleitung beispielsweise im Inneren einer im Zentrum einer Getriebeeingangswelle vorgesehenen Hülse verlaufen, während die zweite Druckmittelleitung zwar radial außerhalb dieser Hülse, aber noch innerhalb der Getriebeeingangswelle verläuft. Die dritte Druckmittelleitung schließlich verläuft radial zwischen der Außenseite der Getriebeeingangswelle und einer Stützhülse für den das Leitrad aufnehmenden Freilauf.

Wie zuvor bereits erläutert, rotiert der Kolben 39 der Kupplungsvorrichtung 44 im Wesentlichen mit der Drehzahl des Gehäuses 4 und damit - einen Zugbetrieb vorausgesetzt - mit Antriebsdrehzahl um die Zentralachse 3. Im Gegensatz dazu rotiert die Versorgungsnabe 10 und damit der Durchlassbereich 12 mit dem zumindest einen Durchlass 14 mit der Drehzahl der Abtriebsnabe 31, und damit aufgrund der Drehverbindung der Abtriebsnabe 31 mit der Getriebeeingangswelle mit Abtriebsdrehzahl um die Zentralachse 3, und zwar ebenfalls bei Zugbetrieb. Druckmittel, welches über die erste Druckmittelleitung 71 und den zumindest einen Durchlass 14 über die wenigstens eine Durchlassmündung 98 in den Druckraum 40 gelangt, tritt, da die wenigstens eine Durchlassmündung 98 radial weit nach außen in den Druckraum 40 greift, auch tief in den Druckraum 40 ein, so dass die Rotationsgeschwindigkeit des Druckmittels auch jenseits der zwischen dem Innendurchmesser 99 der Kolbennabe 33 des Kolbens 39 und der Durchlassmündung 98 liegenden Wegstrecke X noch im Wesentlichen derjenigen Rotationsgeschwindigkeit entspricht, die an der Versorgungsnabe 10 und damit an dem Durchlassbereich 12 anliegt, also der Abtriebsdrehzahl. Selbst in diesem radial mittleren Bereich des Kolbens 39 der Kupplungsvorrichtung 44 würde sich also nur unwesentlich bemerkbar machen, dass Gehäusedeckel 5 und Kolben 39 das Druckmittel mit Antriebsdrehzahl beaufschlagen, und dadurch eine Beschleunigung in das Druckmittel für eine höhere Rotationsgeschwindigkeit im Druckraum 40 um die Zentralachse 3 einbringen.

Zwar rotiert der Kolben 39 der Kupplungsvorrichtung 44 zumindest im Wesentlichen mit Antriebsdrehzahl, jedoch werden wesentliche Bauteile im Torusraum 41 mit geringerer Rotationsgeschwindigkeit bewegt. Während nämlich der Ausgang 63 des Torsionsschwingungsdämpfers 50 ebenso wie das Turbinenrad 9 jeweils mit Abtriebsdrehzahl rotieren, nehmen die Zwischenübertragungselemente 60 ebenso wie das Tilgersystem 70 eine Rotationsgeschwindigkeit an, welche geringer als die Antriebsdrehzahl, aber höher als die Abtriebsdrehzahl ist. Im Torusraum 41 wird Druckmittel, das über die zweite Druckmittelleitung 72 und damit den Durchgang 20 des Verbindungsbereichs 21 in den Torusraum 41 eingeleitet wird, mit einer vergleichbaren Rotationsgeschwindigkeit um die Zentralachse 3 bewegt wie das über die Durchlassmündung 98 in den Druckraum 40 eingeführte Druckmittel. In beiden Räumen 40 und 41 wird das Druckmittel also mit einer Rotationsgeschwindigkeit um die Zentralachse 3 rotieren, die betragsmäßig zwischen der Antriebs- und der Abtriebsdrehzahl liegt. Diese vergleichbaren Rotationsgeschwindigkeiten in den beiden Räumen 40 und 41 führen dazu, dass der Kolben 39 der Kupplungsvorrichtung 44 beidseits mit vergleichbaren Drücken beaufschlagt ist, so dass erst dass willkürliche Erhöhen des Drucks in einem der beiden Räume 40 und 41 zu einer Axialverlagerung des Kolbens 39 und damit zu einem Ein- oder Ausrücken des Kolbens 39 führt. Betriebsbedingte ungewollte Axialverlagerungen des Kolbens 39 sind also aufgrund des Durchlassbereiches 12 wirksam vermeidbar.

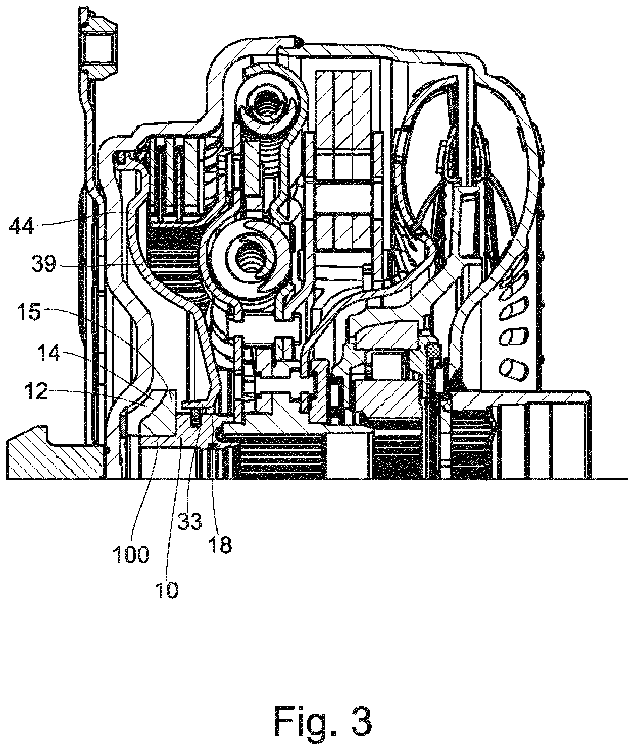

Während die in den Fig. 1 und 2 behandelte Ausführung über eine einstückige Ausbildung von Durchlassbereich 12, Aufnahmebereich 18 und Versorgungsnabe 10 verfügt, zeigt Fig. 3 eine Ausführung, bei welcher der Durchlassbereich 12 mit dem zumindest einen Durchlass 14 Teil einer Durchlasseinrichtung 15 ist, die an einer Versorgungsnabe 10 drehfest aufgenommen ist, wobei die Versorgungsnabe 10 weiterhin einen Aufnahmebereich 18 für die Kolbennabe 33 des Kolbens 39 der Kupplungseinrichtung 44 aufweist. Die drehfeste Aufnahme der Durchlasseinrichtung 15 an der Versorgungsnabe 10 kann beispielsweise dadurch erfolgen, dass die Durchlasseinrichtung 15 durch Aufpressen oder Aufschrumpfen und damit kraftschlüssig an einem Zentrierbereich 100 der Versorgungsnabe 10 befestigt wird.

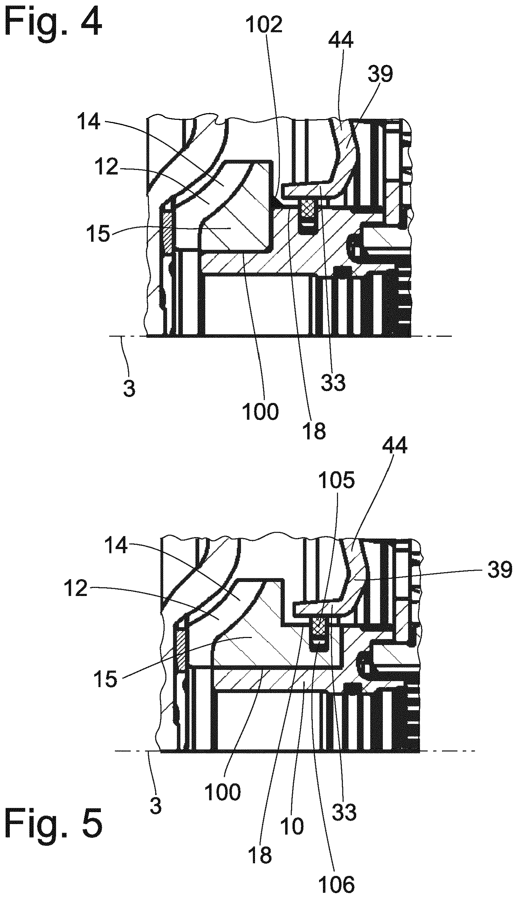

In Fig. 4 ist nicht nur der Bereich von Versorgungsnabe 10 und von Durchlasseinrichtung 15 vergrößert herausgezeichnet, sondern es ist auch eine stoffschlüssige Verbindung zwischen der Versorgungsnabe 10 und der Durchlasseinrichtung 15 dargestellt, und zwar in Form einer Schweißnaht 102. Alternativ ist ebenso vorstellbar, dass anstelle der Schweißnaht 102 eine Lötverbindung oder eine Klebeverbindung zwischen der Versorgungsnabe 10 und der Durchlasseinrichtung 15 hergestellt wird. Auch bei dieser Ausführung dient die Versorgungsnabe 10 zur Bereitstellung eines Aufnahmebereiches 18 für die Kolbennabe 33 des Kolbens 39 der Kupplungseinrichtung 44. Anders ist dies bei der Ausführung nach Fig. 5, bei welcher die Durchlasseinrichtung 15 auf dem Zentrierbereich 100 der Versorgungsnabe 10 befestigt und axial in Richtung Abtriebsseite der Versorgungsnabe 10 verlängert ist, so dass nun die Durchlasseinrichtung 15 einen Aufnahmebereich 18 für die Kolbennabe 33 des Kolbens 39 der Kupplungseinrichtung 44 aufweist. Die Abdichtung 105 sitzt dann in einer Vertiefung 106 der Durchlasseinrichtung 15.

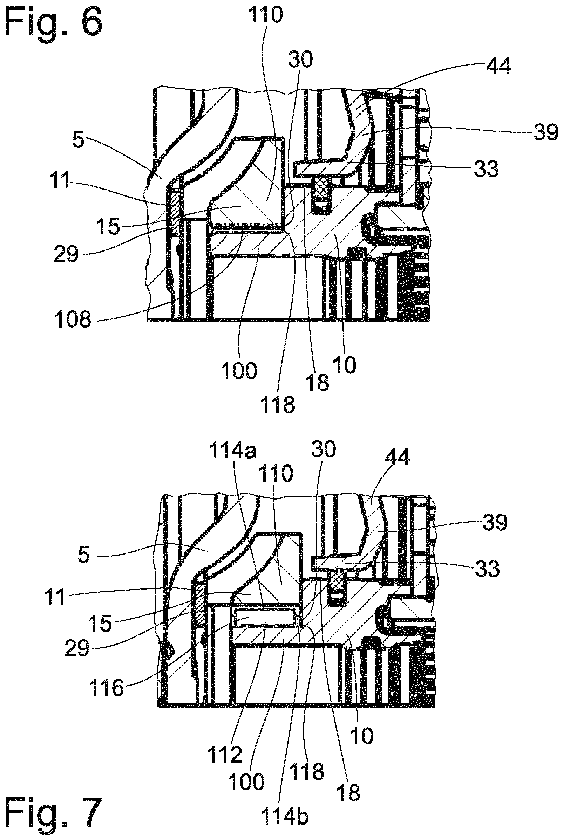

Die in Fig. 6 und 7 gezeigten Ausführungen zeigen jeweils eine formschlüssige Verbindung zwischen der Versorgungsnabe 10 und der Durchlasseinrichtung 15, und zwar gemäß Fig. 6 in Form einer Verzahnung 108 radial zwischen dem Zentrierbereich 100 der Versorgungsnabe 10 und einer Durchlassnabe 110, und gemäß Fig. 7 in Form einer Nut-Feder-Verbindung 112, und zwar ebenfalls radial zwischen dem Zentrierbereich 100 der Versorgungsnabe 10 und der Durchlassnabe 110. Die Nut-Feder-Verbindung 112 besteht darin, dass an der radialen Innenseite der Durchlassnabe 110 ebenso wie an der radialen Außenseite des Zentrierbereiches 100 der Versorgungsnabe 10 jeweils zumindest eine Axialnut 114a, 114b verläuft, und die jeweils zwei Axialnuten 114 a und 114b jeweils durch ein in beide Axialnuten 114a und 114b eingreifendes Verbindungselement 116 in Drehverbindung gebracht werden. Beiden formschlüssigen Auführungen gemeinsam ist, dass zur axialen Festlegung der Durchlasseinrichtung 15 gegenüber der Versorgungsnabe 10 der Abstandsring 11 zwischen Gehäusedeckel 5 und Durchlasseinrichtung als erste Axialsicherung 29 und eine Radialstufe 118 an der Versorgungsnabe 10 zwischen deren Zentrierbereich 100 und deren Aufnahmebereich 18 als zweite Axialsicherung 30 wirksam ist. Schließlich dient auch bei diesen Ausführungen die Versorgungsnabe 10 zur Bereitstellung des Aufnahmebereiches 18 für die Kolbennabe 33 des Kolbens 39 der Kupplungseinrichtung 44.

### Bezugszeichen

- 1: Kopplungsanordnung
- 2: hydrodynamischer Drehmomentwandler
- 3: Zentralachse
- 4: Gehäuse
- 5: Gehäusedeckel
- 6: Antriebsplatte
- 8: Pumpenrad
- 9: Turbinenrad
- 10: Versorgungsnabe
- 11: Abstandsring
- 12: Durchlassbereich
- 13: Befestigungselemente
- 14: Durchlass
- 15: Durchlasseinrichtungl
- 17: abtriebsseitige Gehäusewandung
- 18: Aufnahmebereich
- 19: Axialvorsprung
- 20: Durchgang
- 21: Verbindungsbereich
- 22: Abdichtung
- 23: Vertiefung
- 24: Abdichtung
- 29: Axialsicherung
- 30: Axialsicherung
- 31: Abtriebsnabe
- 32: Innenverzahnung
- 33: Kolbennabe
- 34: Freilauf
- 35: abtriebsseitige Gehäusenabe
- 36: Leitrad
- 37: hydrodynamischer Kreis
- 39: Kolben
- 40: Druckraum
- 41: Torusraum
- 42: Kupplungselemente
- 43: Kupplungselemente
- 44: Kupplungsvorrichtung
- 45: Verzahnung
- 46: Innenkupplungselemententräger
- 47: Verzahnung
- 48: Eingang des Torsionsschwingungsdämpfers
- 50: Torsionsschwingungsdämpfer
- 51: radial äußere Nabenscheibe
- 52: radial äußere erste Dämpfereinheit
- 54: Deckblech
- 56: Deckblech
- 58: radial innere zweite Dämpfereinheit
- 60: Zwischenübertragungselemente
- 62: radial innere Nabenscheibe
- 63: Ausgang des Torsionsschwingungsdämpfers
- 64: antriebsseitiges Tilgermassen-Trägerelement
- 66: abtriebsseitiges Tilgermassen-Trägerelement
- 67: Tilgermassenträger
- 68: Tilgermassen
- 69: Tilgermassenelemente
- 70: Tilgersystem
- 71: erste Druckmittelleitung
- 72: zweite Druckmittelleitung
- 73: dritte Druckmittelleitung
- 74: Drucklager
- 75: Schwingungsdämpfungseinrichtung
- 76: Passage
- 98: Durchlassmündungen
- 99: Innendurchmesser der Kolbennabe
- 100: Zentierbereich
- 102: Schweißnaht
- 105: Abdichtung
- 106: Vertiefung
- 108: Verzahnung
- 110: Durchlassnabe
- 112: Nut-Feder-Verbindung
- 114: Axialnut
- 116: Verbindungselement
- 118: Radialstufe

## Patentansprüche

1. Hydrodynamische Kopplungsanordnung (1) mit einem um eine Zentralachse (3) drehbaren Gehäuse (4), welches an Druckmittelleitungen (71 bis 73) der hydrodynamischen Kopplungsanordnung (1) zur Ein- oder Ableitung von Druckmittel wenigstens in einen Druckraum (40) der hydrodynamischen Kopplungsanordnung (1) angeschlossen ist, der mittels eines Kolbens (39) einer Kupplungseinrichtung (44) der hydrodynamischen Kopplungsanordnung (1) gegenüber einem in dem Gehäuse (4) ebenfalls vorgesehenen Torusraum (41) eines hydrodynamischen Kreises (37) der hydrodynamischen Kopplungsanordnung (1) abgedichtet ist, wobei zur axial verlagerbaren Aufnahme einer radial inneren Kolbennabe (33) des Kolbens (39) der Kupplungseinrichtung (44) ein relativ zum Gehäuse (4) drehbarer Aufnahmebereich (18) der hydrodynamischen Kopplungsanordnung (1) und zur Herstellung zumindest einer Strömungsverbindung zwischen wenigstens einer Druckmittelleitung (71) und dem Druckraum (40) zumindest ein relativ zum Gehäuse (4) drehbarer Durchlass (14) in einem Durchlassbereich (12) der hydrodynamischen Kopplungsanordnung (1) vorgesehen ist, **dadurch gekennzeichnet, dass** wenigstens eine Durchlassmündung (98) des zumindest einen Durchlasses (14) des Durchlassbereiches (12) in Bezug zur Zentralachse (3) radial weiter nach außen ragt als ein den Aufnahmebereich (18) umschließender Innendurchmesser (99) der radial inneren Kolbennabe (33) des Kolbens (39),
wobei die Durchlassmündung (98) zumindest an einer Position um eine Wegstrecke X radial weiter nach außen ragt als der Innendurchmesser (99) der Kolbennabe (33), wobei die Wegstrecke X an der Position größer ist, als eine radiale Wegstrecke zwischen Innendurchmesser (99) der Kolbennabe (33) und einem Außendurchmesser der Kolbennabe (33).

2. Hydrodynamische Kopplungsanordnung (1) nach Anspruch 1, **dadurch gekennzeichnet, dass** der Durchlassbereich (12) und/oder der Aufnahmebereich (18) für den Kolben (39) der Kupplungseinrichtung (44) Teil einer Versorgungsnabe (10) sind, die axial zwischen einem antriebsseitigen Gehäusedeckel (5) des Gehäuses (4) und einer Abtriebsnabe (31), die ihrerseits in Abstützverbindung mit einer abtriebsseitigen Gehäusewandung (17) des Gehäuses (4) steht, vorgesehen ist.

3. Hydrodynamische Kopplungsanordnung (1) nach Anspruch 1, **dadurch gekennzeichnet, dass** der Durchlassbereich (12) und/oder der Aufnahmebereich (18) für den Kolben (39) der Kupplungseinrichtung (44) Teil einer Durchlasseinrichtung (15) sind, die an einer Versorgungsnabe (10) drehfest aufgenommen ist.

4. Hydrodynamische Kopplungsanordnung (1) nach Anspruch 3, **dadurch gekennzeichnet, dass** die drehfeste Aufnahme der Durchlasseinrichtung (15) an der Versorgungsnabe (10) kraftschlüssig erfolgt.

5. Hydrodynamische Kopplungsanordnung (1) nach Anspruch 3, **dadurch gekennzeichnet, dass** die drehfeste Aufnahme der Durchlasseinrichtung (15) an der Versorgungsnabe (10) formschlüssig erfolgt.

6. Hydrodynamische Kopplungsanordnung (1) nach Anspruch 3, **dadurch gekennzeichnet, dass** die drehfeste Aufnahme der Durchlasseinrichtung (15) an der Versorgungsnabe (10) stoffschlüssig erfolgt.

## Claims

1. Hydrodynamic coupling arrangement (1) having a housing (4) which is rotatable about a central axis (3) and which is connected to pressure medium lines (71 to 73) of the hydrodynamic coupling arrangement (1) for the introduction or discharge of pressure medium at least into a pressure chamber (40) of the hydrodynamic coupling arrangement (1), which pressure chamber (40) is sealed off by means of a piston (39) of a clutch device (44) of the hydrodynamic coupling arrangement (1) with respect to a dead space (41), which is likewise provided in the housing (4), of a hydrodynamic circuit (37) of the hydrodynamic coupling arrangement (1), wherein a receiving region (18), which is rotatable relative to the housing (4), of the hydrodynamic coupling arrangement (1) is provided for axially displaceably receiving a radially inner piston hub (33) of the piston (39) of the clutch device (44), and at least one passage (14), which is rotatable relative to the housing (4), in a passage region (12) of the hydrodynamic coupling arrangement (1) is provided for producing at least one flow connection between at least one pressure medium line (71) and the pressure chamber (40), **characterized in that** at least one passage mouth (98) of the at least one passage (14) of the passage region (12) projects radially further outwards in relation to the central axis (3) than an inner diameter (99), surrounding the receiving region (18), of the radially inner piston hub (33) of the piston (39),
wherein the passage mouth (98), at least at one position, projects radially further outwards than the inner diameter (99) of the piston hub (33) by a distance X, wherein the distance X at the position is greater than a radial distance between inner diameter (99) of the piston hub (33) and an outer diameter of the piston hub (33).

2. Hydrodynamic coupling arrangement (1) according to Claim 1, **characterized in that** the passage region (12) and/or the receiving region (18) for the piston (39) of the clutch device (44) are part of a supply hub (10) which is provided axially between a drive-side housing cover (5) of the housing (4) and an output hub (31), which in turn has a supporting connection to an output-side housing wall (17) of the housing (4).

3. Hydrodynamic coupling arrangement (1) according to Claim 1, **characterized in that** the passage region (12) and/or the receiving region (18) for the piston (39) of the clutch device (44) are part of a passage device (15) which is received rotationally fixedly on a supply hub (10) .

4. Hydrodynamic coupling arrangement (1) according to Claim 3, **characterized in that** the passage device (15) is received rotationally fixedly on the supply hub (10) in non-positively locking fashion.

5. Hydrodynamic coupling arrangement (1) according to Claim 3, **characterized in that** the passage device (15) is received rotationally fixedly on the supply hub (10) in positively locking fashion.

6. Hydrodynamic coupling arrangement (1) according to Claim 3, **characterized in that** the passage device (15) is received rotationally fixedly on the supply hub (10) in cohesive fashion.

## Revendications

1. Agencement de couplage hydrodynamique (1) comprenant un boîtier (4) pouvant tourner autour d'un axe central (3), qui est raccordé à des conduites de fluide sous pression (71 à 73) de l'agencement de couplage hydrodynamique (1) pour introduire ou évacuer du fluide sous pression au moins dans un espace de pression (40) de l'agencement de couplage hydrodynamique (1), qui est étanchéifié au moyen d'un piston (39) d'un dispositif d'accouplement (44) de l'agencement de couplage hydrodynamique (1) par rapport à un espace toroïdal (41) d'un circuit hydrodynamique (37) de l'agencement de couplage hydrodynamique (1), également prévu dans le boîtier (4), une région de logement (18) de l'agencement de couplage hydrodynamique (1) pouvant tourner par rapport au boîtier (4) étant prévue pour le logement déplaçable axialement d'un moyeu de piston radialement intérieur (33) du piston (39) du dispositif d'accouplement (44) et au moins un passage (14) pouvant tourner par rapport au boîtier (4) étant prévu dans une région de passage (12) de l'agencement de couplage hydrodynamique (1) pour l'établissement d'au moins une liaison fluidique entre au moins une conduite de fluide sous pression (71) et l'espace de pression (40), **caractérisé en ce qu'**au moins une embouchure de passage (98) de l'au moins un passage (14) de la région de passage (12) fait saillie radialement davantage vers l'extérieur par rapport à l'axe central (3) qu'un diamètre intérieur (99) du moyeu de piston radialement intérieur (33) du piston (39), entourant la région de logement (18), l'embouchure de passage (98), au moins au niveau d'une position autour d'une distance de course X faisant saillie radialement davantage vers l'extérieur que le diamètre intérieur (99) du moyeu de piston (33), la distance de course X étant plus grande au niveau de ladite position qu'une distance de course radiale entre le diamètre intérieur (99) du moyeu de piston (33) et un diamètre extérieur du moyeu de piston (33).

2. Agencement de couplage hydrodynamique (1) selon la revendication 1, **caractérisé en ce que** la région de passage (12) et/ou la région de logement (18) pour le piston (39) du dispositif d'accouplement (44) font partie d'un moyeu d'alimentation (10) qui est prévu axialement entre un couvercle de boîtier (5), côté entraînement, du boîtier (4) et un moyeu de prise de force (31) qui est pour sa part en liaison de support avec une paroi de boîtier (17), côté prise de force, du boîtier (4).

3. Agencement de couplage hydrodynamique (1) selon la revendication 1, **caractérisé en ce que** la région de passage (12) et/ou la région de logement (18) pour le piston (39) du dispositif d'accouplement (44) font partie d'un dispositif de passage (15) qui est reçu de manière solidaire en rotation au niveau d'un moyeu d'alimentation (10).

4. Agencement de couplage hydrodynamique (1) selon la revendication 3, **caractérisé en ce que** le logement solidaire en rotation du dispositif de passage (15) au niveau du moyeu d'alimentation (10) s'effectue par engagement par force.

5. Agencement de couplage hydrodynamique (1) selon la revendication 3, **caractérisé en ce que** le logement solidaire en rotation du dispositif de passage (15) au niveau du moyeu d'alimentation (10) s'effectue par engagement par correspondance de formes.

6. Agencement de couplage hydrodynamique (1) selon la revendication 3, **caractérisé en ce que** le logement solidaire en rotation du dispositif de passage (15) au niveau du moyeu d'alimentation (10) s'effectue par engagement par liaison de matière.
